# EUROPÄISCHE PATENTANMELDUNG

(11) **EP 3 189 980 A1**
(43) Veröffentlichungstag der Anmeldung: **12.07.2017**
(21) Anmeldenummer: 16193623.2
(22) Anmeldetag: 13.10.2016
(51) Int. Cl.: B60C 9/18, B29D 30/06

(54) **FAHRZEUGLUFTREIFEN**

(30) Priorität: 08.01.2016 DE 102016200132
(71) Anmelder: Continental Reifen Deutschland GmbH, 30165 Hannover (DE)
(72) Erfinder: Höer, Thorsten, 34454 Bad Arolsen (DE)
(74) Vertreter: Finger, Karsten

(57) **Zusammenfassung**

Die Erfindung betrifft einen Fahrzeugluftreifen in Radialbauart mit einem Laufstreifen (1), einem zweilagigen Gürtel (2, 2a, 2b), Wulstbereichen mit Wulstkernen sowie mit einer zumindest einlagig ausgeführten Karkasse (3) mit in radialer Richtung angeordneten Festigkeitsträgern, wobei die Karkasse (3) die Wulstkerne von radial innen nach radial außen umläuft oder in den Wulstbereichen geklemmt ist und wobei im Bereich des Gürtelkanten-Korbbogens (4) ein zusätzlicher Streifen (5) aus einer Kautschukmischung angeordnet ist, welcher ringkreisförmig über den Umfang des Reifens geschlossen ist, wobei der zusätzliche Streifen eine Verstärkungsstreifen (5) ist, welcher parallel zueinander ausgerichtete Festigkeitsträger aufweist und wobei diese Festigkeitsträger derart orientiert sind, dass diese kreuzend zu den Festigkeitsträgern der Karkasse (3) angeordnet sind, so dass diese einen Winkel von mindestens 5° mit den Festigkeitsträgern der Karkasse (3) einschließen.

## Beschreibung

Die Erfindung betrifft einen Fahrzeugluftreifen in Radialbauart mit einem Laufstreifen, einem zweilagigen Gürtel, Wulstbereichen mit Wulstkernen sowie mit einer zumindest einlagig ausgeführten Karkasse mit in radialer Richtung angeordneten Festigkeitsträgern, wobei die Karkasse die Wulstkerne von radial innen nach radial außen umläuft oder in den Wulstbereichen geklemmt ist und wobei im Bereich des Gürtelkanten-Korbbogens ein zusätzlicher Streifen angeordnet ist, welcher ringkreisförmig über den Umfang des Reifens geschlossen ist.

Eine derartige Reifenkonstruktion, bei der wenigstens ein zu den notwendigen und üblichen Reifenbauteilen zusätzlicher Streifen in Form einer Lage aus einer Kautschukmischung im Bereich des Gürtelkanten-Korbbogens angeordnet ist, ist dem Fachmann bekannt.

"Karkasse mit in radialer Richtung angeordneten Festigkeitsträgern" umfasst Winkel zwischen +/- 85° und +/- 90°, welche die Festigkeitsträger der Karkasse mit der Reifenumfangsrichtung einschließen.
"Gürtelkanten-Korbbogen" umfasst den Bereich des Reifenquerschnitts, dessen Kontur am stärksten gekrümmt ist. Der Bereich befindet sich in etwa im Übergang Gürtel zur Reifenseitenwand.
Der Begriff "Fahrzeugluftreifen" umfasst insbesondere PKW-, Van- und LKW-Reifen.

Der unvulkanisierte Reifenrohling wird zum Vulkanisieren in eine Vulkanisierform überführt. Dort wird der Reifenrohling durch einen aufblähenden Innenbalg erhoben und an die Formflächen der Vulkanisierform gedrückt. Es hat sich gezeigt, dass der Reifenrohling im Bereich des Gürtelkanten-Korbbogens während des Einformvorganges zu weit erhoben und somit zu groß wird, so dass beim Zusammenfahren der Formsegmente der Vulkanisierform an dieser Stelle Gummimaterial durch die Formsegmentkanten abgekniffen wird. Dieses abgekniffene Gummimaterial bleibt an der Form haften und wird in den nächsten Reifenrohling, welcher in dieser Form vulkanisiert wird, mit eingeheizt. Dieser nächste Reifen wird somit unbrauchbar und zu Ausschuß.

Es ist die Aufgabe der vorliegenden Erfindung, einen Fahrzeugluftreifen bereitzustellen, der gut zu vulkanisieren ist und der eine gleiche oder sogar verbesserte Performance, insbesondere im HighSpeed, aufweist.

Die Aufgabe wird gelöst, indem der zusätzliche Streifen ein Verstärkungsstreifen ist, welcher parallel zueinander ausgerichtete Festigkeitsträger aufweist und indem diese Festigkeitsträger derart orientiert sind, dass diese kreuzend zu den Festigkeitsträgern der Karkasse angeordnet sind, so dass diese einen Winkel von mindestens 5° mit den Festigkeitsträgern der Karkasse einschließen.

Erfindungswesentlich ist, dass der im Stand der Technik nicht verstärkte Bereich im Gürtelkanten-Korbbogen nun durch einen zusätzlichen Verstärkungsstreifen verstärkt ist. Dieser Verstärkungsstreifen bewirkt während des Einformvorganges des Reifens in die Vulkanisierform im Bereich des Gürtelkanten-Korbbogens eine Beschränkung des Wachstums, so dass kein Gummimaterial mehr über die Form übersteht und nicht mehr durch die zusammenfahrenden Formsegmente abgekniffen werden kann. Die nachfolgenden Reifenrohlinge können jeweils in der selben Vulkanisierform ohne die Gefahr des Einheizens von Gummiresten vulkanisiert werden. Ein weiterer Vorteil des zusätzlichen Verstärkungsstreifens ist, dass die Reifenkontur im Bereich des Laufstreifens vorteilhaft beeinflusst wird, welches sich positiv auf die Performance, insbesondere auf den HighSpeed auswirkt.

Der Verstärkungsstreifen ist ein Streifen aus einer Kautschukmischung, in die parallel zueinander und beabstandet voneinander angeordnete Festigkeitsträger eingebettet sind. Diese Festigkeitsträger sind kreuzend zu den Festigkeitsträgern der Karkasse orientiert, so dass ein "Winkelgewebe" aus den vorgenannten Lagen gebildet ist. Dieses "Winkelgewebe" bildet einen Widerstand gegen eine zu große Erhebung während des Einformvorganges des Reifenrohlings in die Vulkanisierform und beeinflusst die Reifenkontur hinsichtlich der Reifenperformance positiv.

Vorteilhaft ist es, wenn die Festigkeitsträger des zusätzlichen Verstärkungsstreifens einen Winkel von 30° bis 45° mit den Festigkeitsträgern der Karkasse einschließen. Dieser Winkel ist optimal, da die Karkasse durch den zusätzlichen Verstärkungsstreifen nicht negativ beeinflusst wird, keinen sogenannten "S-Schlag" bekommt und ihren gleichmäßigen Fadenverlauf beibehält.

Zweckmäßig ist es, wenn die Festigkeitsträger des zusätzlichen Verstärkungsstreifens textile Festigkeitsträger aus Nylon, Aramid oder aus Avalon bestehen. Diese Materialien lassen sich gut mit den Festigkeitsträgermaterialien der Karkasse abstimmten und sind ohne aufwendige Änderungen in dem bestehenden Herstellprozeß einzusetzen.

Zweckmäßig ist es, wenn die Festigkeitsträger des zusätzlichen Verstärkungsstreifens Korde aus wenigstens zwei miteinander verdrehten Garnen sind. Die Verwendung von Korden im Verstärkungsstreifen beeinflusst die Karkasse nicht. Eine Ein-Faden-Konstruktion könnte unter Umständen nachteilig in das Karkassmaterial eindringen.

Vorteilhaft ist es, wenn die dem Laufstreifen zugewandte obere Kante des zusätzlichen Verstärkungsstreifens die radial innere Gürtellagenkante überlappt und etwa bis zu der Kante der radial äußeren Gürtellagenkante geführt ist. Durch diesen Überlapp des Verstärkungsstreifens mit der radial inneren Gürtellage ist der zusätzliche Verstärkungsstreifen fixiert.

Zweckmäßig ist es, wenn die dem Wulstbereich zugewandte Kante des zusätzlichen Verstärkungsstreifens die Partingline durchläuft und etwa 5mm unterhalb dieser angeordnet ist. "Partingline" ist die Linie an der im Falle einer segmentierten Vulkanisierform die Seitenwandschale an die Formsegmente stößt, wobei die Formsegmente den Laufstreifen und die Reifenschulter formen. Die zu weite Erhebung des Reifenrohlings im Gürtelkanten-Korbbogen ist zuverlässig vermieden.

Erfindungsgemäß ist die obere Kante des zusätzlichen Verstärkungsstreifens entweder zwischen der Karkasse und der radial inneren Gürtellage oder zwischen der radial inneren Gürtellage und der radial äußeren Gürtellage angeordnet. Bei der ersten Alternative ist die obere Kante des zusätzlichen Verstärkungsstreifens zwischen der Karkasse und der radial inneren Gürtellage geklemmt. Bei der zweiten Alternative, bei der die obere Kante des zusätzlichen Verstärkungsstreifens zwischen den beiden Gürtellagen geklemmt ist, ist die Fixierung weiter verbessert.

Weitere Merkmale, Vorteile und Einzelheiten der Erfindung werden nun anhand der schematischen Zeichnungen, die Ausführungsbeispiele der Erfindung darstellen, näher beschrieben. Dabei zeigen die
Fig. 1 einen hälftigen Querschnitt durch die den Laufstreifen beinhaltende obere Hälfte des Reifens;
Fig. 2 einen anderen hälftigen Querschnitt durch die den Laufstreifen beinhaltende obere Hälfte des Reifens.

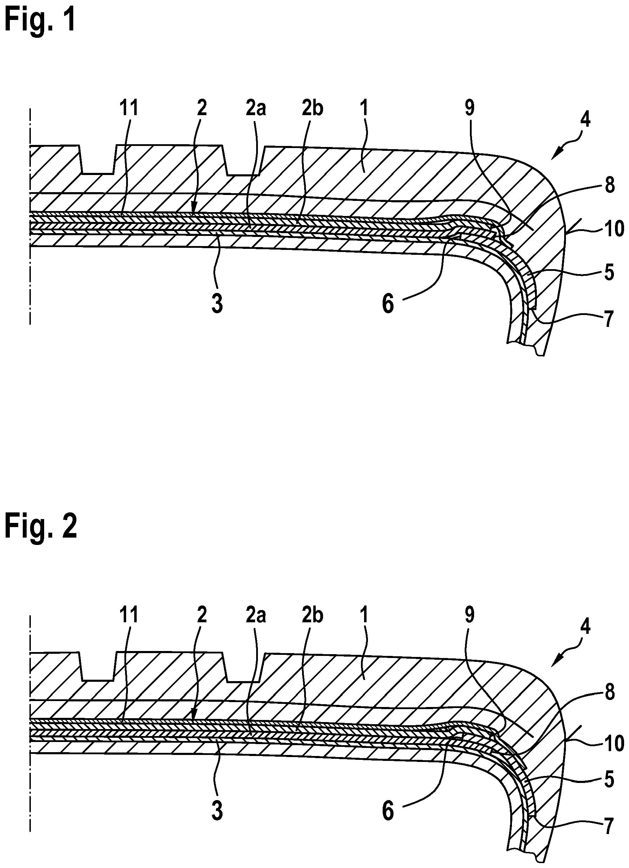

Die Fig. 1 und die Fig. 2 zeigen den Kopfbereich eines hälftigen Reifenquerschnittes gemäß der Erfindung und werden nachfolgend gemeinsam beschrieben.
Der Fahrzeugluftreifen in Radialbauart weist einen Laufstreifen 1, einen zweilagigen Gürtel 2 mit einer radial inneren Gürtellage 2a und einer radial äußeren Gürtellage 2b, Wulstbereiche mit Wulstkernen (nicht dargestellt) sowie eine einlagig ausgeführte Karkasse 3 mit in radialer Richtung angeordneten Festigkeitsträgern auf. Der Gürtel 2 ist mit einer Gürtelbandagenlage 11 abgedeckt. Die Karkasse 3 umläuft die Wulstkerne von radial innen nach radial außen. Im Bereich des Gürtelkanten-Korbbogens 4 ist ein zusätzlicher Verstärkungsstreifen 5 angeordnet, welcher ringkreisförmig über den Umfang des Reifens geschlossen ist. Der zusätzliche Verstärkungsstreifen 5 weist parallel zueinander ausgerichtete Festigkeitsträger auf. Diese Festigkeitsträger sind derart orientiert, dass diese kreuzend zu den Festigkeitsträgern der Karkasse 3 angeordnet sind, so dass diese einen Winkel von mindestens 5°, vorzugsweise von 30° bis 45° mit den Festigkeitsträgern der Karkasse 3 einschließen. Die Festigkeitsträger des zusätzlichen Verstärkungsstreifens 5 sind textile Festigkeitsträger aus Nylon, vorzugsweise Korde aus zwei miteinander verdrehten Garnen. Die dem Laufstreifen 1 zugewandte obere Kante 6 des zusätzlichen Verstärkungsstreifens 5 überlappt mit der Kante 8 der radial inneren Gürtellage 2a und ist etwa bis zu der Kante 9 der radial äußeren Gürtellage 2b geführt (fig.1) bzw. überlappt mit der Kante 9 der radial äußeren Gürtellage 2b (Fig.2). Die dem Wulstbereich zugewandte Kante 7 des zusätzlichen Verstärkungsstreifens durchläuft die Partingline 10 und ist etwa 5mm unterhalb dieser angeordnet. Die obere Kante 6 des zusätzlichen Verstärkungsstreifens ist entweder, wie in Fig. 1 gezeigt, zwischen der Karkasse 3 und der radial inneren Gürtellage 2a oder, wie in Fig. 2 gezeigt, zwischen der radial inneren Gürtellage 2a und der radial äußeren Gürtellage 2b angeordnet.

### Bezugszeichenliste

- 1: Laufstreifen
- 2: Gürtel
- 2a: radial innere Gürtellage
- 2b: radial äußere Gürtellage
- 3: Karkasse
- 4: Gürtelkanten-Korbbogen
- 5: Verstärkungsstreifen
- 6: Obere Kante des Verstärkungsstreifens
- 7: Untere Kante des Verstärkungsstreifens
- 8: Kante der radial inneren Gürtellage
- 9: Kante der radial äußeren Gürtellage
- 10: Partingline
- 11: Gürtelbandagenlage

## Patentansprüche

1. Fahrzeugluftreifen in Radialbauart mit einem Laufstreifen (1), einem zweilagigen Gürtel (2, 2a, 2b), Wulstbereichen mit Wulstkernen sowie mit einer zumindest einlagig ausgeführten Karkasse (3) mit in radialer Richtung angeordneten Festigkeitsträgern, wobei die Karkasse (3) die Wulstkerne von radial innen nach radial außen umläuft oder in den Wulstbereichen geklemmt ist und wobei im Bereich des Gürtelkanten-Korbbogens (4) ein zusätzlicher Streifen (5) aus einer Kautschukmischung angeordnet ist, welcher ringkreisförmig über den Umfang des Reifens geschlossen ist,
**dadurch gekennzeichnet,**
**dass** der zusätzliche Streifen eine Verstärkungsstreifen (5) ist, welcher parallel zueinander ausgerichtete Festigkeitsträger aufweist und dass diese Festigkeitsträger derart orientiert sind, dass diese kreuzend zu den Festigkeitsträgern der Karkasse (3) angeordnet sind, so dass diese einen Winkel von mindestens 5° mit den Festigkeitsträgern der Karkasse (3) einschließen.

2. Fahrzeugluftreifen nach Anspruch 1,
**dadurch gekennzeichnet, dass** die Festigkeitsträger des zusätzlichen Verstärkungsstreifens (5) einen Winkel von 30° bis 45° mit den Festigkeitsträgern der Karkasse (3) einschließen.

3. Fahrzeugluftreifen nach Anspruch 1,
**dadurch gekennzeichnet, dass** die Festigkeitsträger des zusätzlichen Verstärkungsstreifens (5) textile Festigkeitsträger aus Nylon, Aramid oder aus Avalon sind.

4. Fahrzeugluftreifen nach einem oder mehreren der vorangehenden Ansprüche,
**dadurch gekennzeichnet, dass** die Festigkeitsträger des zusätzlichen Verstärkungsstreifens (5) Korde aus wenigstens zwei miteinander verdrehten Garnen sind.

5. Fahrzeugluftreifen nach einem oder mehreren der vorangehenden Ansprüche,
**dadurch gekennzeichnet, dass** die dem Laufstreifen (1) zugewandte obere Kante des zusätzlichen Verstärkungsstreifen (6) die Kante der radial innere Gürtellage (8) überlappt und etwa bis zu der Kante der radial äußeren Gürtellage (9) geführt ist.

6. Fahrzeugluftreifen nach einem oder mehreren der vorangehenden Ansprüche,
**dadurch gekennzeichnet, dass** die dem Wulstbereich zugewandte Kante des zusätzlichen Verstärkungsstreifens (7) die Partingline (10) durchläuft und etwa 5mm unterhalb dieser angeordnet ist.

7. Fahrzeugluftreifen nach Anspruch 5 oder 6,
**dadurch gekennzeichnet, dass** die obere Kante des zusätzlichen Verstärkungsstreifens (6) entweder zwischen der Karkasse (3) und der radial inneren Gürtellage (2a) oder zwischen der radial inneren Gürtellage (2a) und der radial äußeren Gürtellage (2b) angeordnet ist.
